# FASCICULE DE BREVET EUROPEEN

(11) **EP 2 385 405 B1**
(45) Date de publication et mention de la délivrance du brevet: **29.08.2012**
(21) Numéro de dépôt: 11160401.3
(22) Date de dépôt: 08.08.2008
(51) Int. Cl.: G02B 17/06, G03B 37/04, H04N 1/00

(54) **Dispositif de projection panoramique, et procédé mis en oeuvre dans ce dispositif**
Vorrichtung für Panorama-Projektion, und in dieser Vorrichtung umgesetztes Verfahren
Panomaric projection device and method implemented by said device

(30) Priorité: 09.08.2007 FR 0705784
(43) Date de publication de la demande: 09.11.2011
(62) Demande divisionnaire de: 08827211.7
(73) Titulaire: Universite Clermont 1, 63000 Clermont-Ferrand (FR); Stehle, Robert André Marcel, 28800 Bonneval (FR); MB Optique, 91320 Wissous (FR); Bray, Michael, 91320 Wissous (FR)
(72) Inventeur: Stehle, Robert André Marcel, 28800, BONNEVAL (FR); Bray, Michael, 91320, WISSOUS (FR); Sarry, Laurent, 63540, ROMAGNAT (FR); Zeghers, Eric, 43200, LE PERTUIS (FR)
(74) Mandataire: Legrand, Olivier

(56) Documents cités:
- GB-A- 2 298 497
- US-A1- 2003 081 952
- US-A1- 2004 246 333
- US-B1- 6 449 103

## Description

### Domaine technique

La présente invention concerne un dispositif pour projeter une image, par exemple sur les surfaces d'une salle. Elle concerne aussi un procédé mis en oeuvre dans ce dispositif.

Le domaine de l'invention est plus particulièrement celui des vidéoprojecteurs pour applications de réalité virtuelle ou mixte.

Pour une application de réalité virtuelle, le dispositif selon l'invention permet par exemple à un utilisateur de projeter une image sur les surfaces d'une salle, de sorte que l'image projetée crée un environnement de réalité virtuelle, un observateur observant l'image projetée ayant l'illusion d'observer une scène à partir d'un point de vue virtuel.

Pour une application de réalité mixte, le dispositif selon l'invention permet par exemple à un utilisateur de projeter une image sur les surfaces d'une salle, de sorte que l'image projetée crée un environnement de réalité mixte par combinaison avec des éléments réels de la salle.

### Etat de la technique antérieure

La publication GB 2 298 497 décrit un dispositif de projection comprenant un projecteur pour projeter une image mère, et un miroir pour réfléchir ladite image mère sur un écran plat.

Les publications, US 2003 / 081 952 et US 2004 / 246 333 représentent deux exemples de systèmes d'acquisition d'une image d'un environnement tridimensionnel.

On connaît des exemples de dispositif de projection d'une séquence d'images sur un volume, ce dispositif comprenant un unique projecteur. Le projecteur est agencé pour projeter une image dans une direction de projection, l'image projetée croissant au fur et à mesure de sa propagation selon un angle solide de projection centré sur la direction de projection. Le volume dans lequel le dispositif peut projeter l'image est limité par l'ouverture du projecteur, c'est-à-dire par la valeur de l'angle solide de projection. Ainsi, un tel dispositif dont le projecteur est posé au milieu d'une salle rectangulaire ne peut pas projeter une image simultanément sur les quatre murs latéraux de la salle.

On connaît aussi des dispositifs de projection comprenant plusieurs projecteurs, chaque projecteur éclairant une facette ou un objet particulier du volume. Ces dispositifs ont le désavantage de comprendre plusieurs projecteurs, ce qui représente un surcoût, et ce qui demande en général de coordonner les projections des projecteurs.

Le but de la présente invention est de proposer un dispositif pour projeter une image à partir d'un seul projecteur, sans que le volume ou l'environnement sur lequel l'image peut être projetée soit limité par une ouverture du projecteur.

### Exposé de l'invention

Cet objectif est atteint avec un dispositif de projection,

Le miroir est dit convexe car il comprend une surface convexe agencée pour réfléchir au moins en partie l'image mère et la projeter sur l'environnement.

De manière préférentielle, le projecteur est agencé pour projeter successivement différentes images mères, comme par exemple des images mères successives d'un flux vidéo. Ces différentes images mères peuvent avoir différentes tailles, et différentes positions par rapport à l'axe de projection.

Le miroir peut être un miroir convexe ayant sensiblement une symétrie de révolution autour d'un axe de révolution. Dans ce cas, l'axe de révolution du miroir et l'axe de projection sont de préférence sensiblement confondus.

Dans ce document, on dit que deux axes sont sensiblement confondus soit lorsqu'ils sont exactement confondus, soit lorsqu'ils sont confondus à une imperfection près.

De manière préférentielle, le miroir est agencé pour réfléchir l'image mère en déformant l'image mère. Par exemple, le projecteur peut être agencé pour projeter l'image mère dans un premier angle solide, et le miroir peut être agencé pour projeter l'image mère dans un deuxième angle solide supérieur au premier angle solide. De préférence, le premier angle solide est inférieur à 2π stéradians, c'est-à-dire à une demi-sphère.

Dans ce document, on dit que l'image mère est projetée dans un angle solide si la taille de cette image mère croit selon cet angle solide au fur et à mesure de sa propagation le long d'une direction de projection.

Le deuxième angle solide peut avoir n'importe quelle valeur entre 0 et 4π stéradians, la valeur du deuxième angle solide dépendant notamment de la position de l'image mère par rapport à l'axe de projection, de l'incidence de l'axe de projection sur le miroir, et de la taille de l'image mère. Pour une image mère donnée, le deuxième angle solide peut être supérieur à 2π stéradians (c'est-à-dire une demi-sphère), voire même sensiblement égal ou légèrement inférieur à 4π stéradians (c'est-à-dire une sphère).

De même, le miroir peut être agencé pour projeter l'image mère dans un angle autour de l'axe de projection, la valeur de cet angle pouvant être comprise entre 0 degrés et 360 degrés, et dépendant notamment de la position de l'image par rapport à l'axe de projection, de l'incidence de l'axe de projection sur le miroir, et de la taille de l'image mère. Pour une image mère donnée, le miroir peut être agencé pour projeter l'image mère dans un angle supérieur à 180 degrés autour de l'axe de projection, voire même sensiblement égal à 360 degrés autour de l'axe de projection.

Dans ce document, un angle autour d'un axe est défini dans un plan perpendiculaire à cet axe.

Le dispositif selon l'invention comprend en outre des moyens pour acquérir au moins une image de l'environnement tridimensionnel. Une image de l'environnement peut imager une partie ou la totalité de l'environnement tridimensionnel. Les moyens d'acquisition peuvent être agencés pour acquérir au moins une image de l'environnement à partir de rayons lumineux émis par l'environnement et non réfléchis par le miroir. Les moyens d'acquisition peuvent comprendre une caméra, et des moyens de mise en rotation de la caméra autour d'un axe de rotation. De manière préférentielle, les moyens d'acquisition sont agencés pour acquérir plusieurs images de l'environnement, la somme de ces images imageant l'environnement à 360 degrés autour d'un axe tel l'axe de rotation. De préférence, l'axe de projection et l'axe de rotation sont sensiblement confondus. De plus, le dispositif selon l'invention comprend en outre des moyens pour modéliser l'environnement tridimensionnel à partir d'au moins une image de l'environnement.

Le dispositif selon l'invention comprend en outre des moyens pour construire l'image mère en fonction d'une position d'un observateur et d'une modélisation de l'environnement tridimensionnel, de sorte que l'observateur observant de sa position une projection de l'image mère sur l'environnement observe une scène à partir d'un point de vue virtuel donné.

De plus, le dispositif selon l'invention peut comprendre en outre des moyens pour mesurer au moins une caractéristique radiométrique de l'environnement tridimensionnel, et des moyens pour corriger l'image mère en fonction d'au moins une caractéristique radiométrique mesurée.

Enfin, le dispositif selon l'invention peut comprendre en outre des moyens pour fixer le miroir à un mur, sol ou plafond.

Suivant un autre aspect de l'invention, il est proposé un procédé de projection selon la revendication 1.

Une partie de l'image mère peut ne pas être réfléchie par le miroir, cette partie de l'image mère étant directement projetée sur l'environnement tridimensionnel par le projeteur.

De manière préférentielle, le miroir réfléchit l'image mère en déformant l'image mère. Par exemple, le projecteur peut projeter l'image mère dans un premier angle solide, et le miroir peut projeter l'image mère dans un deuxième angle solide supérieur au premier angle solide. De préférence, le premier angle solide est inférieur à 2π stéradians, c'est-à-dire à une demi-sphère.

Le deuxième angle solide peut avoir n'importe quelle valeur entre 0 et 4π stéradians, la valeur du deuxième angle solide dépendant notamment de la position de l'image par rapport à l'axe de projection, de l'incidence de l'axe de projection sur le miroir, et de la taille de l'image mère. Pour une image mère donnée, le deuxième angle solide peut être supérieur à 2π stéradians (c'est-à-dire à une demi-sphère), voire même sensiblement égal ou légèrement inférieur à 4π stéradians (c'est-à-dire à une sphère).

De même, le miroir peut projeter l'image mère dans un angle autour de l'axe de projection, la valeur de cet angle pouvant être comprise entre 0 degrés et 360 degrés. Pour une image mère donnée, le miroir peut projeter l'image mère dans un angle supérieur à 180 degrés autour de l'axe de projection, voire même sensiblement égal 360 degrés autour de l'axe de projection.

Le procédé selon l'invention comprend en outre une acquisition d'au moins une image de l'environnement tridimensionnel.

L'acquisition d'une image peut comprendre :
- un positionnement d'une caméra à une position angulaire autour d'un axe de rotation, et
- une acquisition d'une image de l'environnement pour cette position angulaire de la caméra, à partir de rayons lumineux émis par l'environnement tridimensionnel.

Le procédé selon l'invention peut comprendre en outre une modélisation de l'environnement tridimensionnel, l'image mère comprenant au moins un point de modélisation, l'acquisition d'images comprenant une acquisition d'au moins une image de l'environnement pour la modélisation, la modélisation comprenant pour chaque point de modélisation et pour chaque image de l'environnement acquise pour la modélisation :
- un calcul de la trajectoire d'un rayon lumineux issu du point de modélisation, réfléchi par le miroir, et projeté sur un premier point de l'environnement,
- un calcul de la trajectoire d'un rayon lumineux issu du premier point de l'environnement et imagé par un point de l'image de l'environnement acquise pour la modélisation, et
- un calcul d'une intersection de la trajectoire du rayon lumineux issu du point de modélisation et de la trajectoire du rayon lumineux issu du premier point de l'environnement.

Plus le nombre de points de modélisation est grand, et plus la résolution de la modélisation est élevée. Les points de modélisation peuvent être répartis sur plusieurs images mères projetées successivement. De manière préférentielle, les images de l'environnement acquises pour la modélisation comprennent plusieurs images de l'environnement, la somme de ces images imageant l'environnement à 360 degrés autour d'un axe tel l'axe de rotation. On peut ainsi modéliser l'environnement à 360 degrés autour de cet axe.

Les calculs de trajectoires peuvent dépendre de paramètres de calcul, le procédé selon l'invention peut comprendre un calibrage des paramètres, l'image mère comprenant au moins un point de calibrage, et l'acquisition d'images comprenant une acquisition d'au moins une image de l'environnement pour le calibrage.

Les images de l'environnement acquises pour le calibrage peuvent comprendre au moins un couple d'images différentes mais qui imagent une partie commune de l'environnement, le calibrage comprenant pour chaque point de calibrage et pour chaque couple d'images :
- une association du point de calibrage avec un point de la première image du couple et avec un point de la deuxième image du couple, le point de la première image du couple et le point de la deuxième image du couple imageant un deuxième point de l'environnement sur lequel est projeté le point de calibrage,
- un calcul d'une position théorique du point de la deuxième image du couple, à partir de la position du point de la première image du couple, et des paramètres de calcul,
le calibrage pouvant comprendre en outre une modification d'au moins un des paramètres de calcul, de manière à minimiser la somme, sur tous les points de calibrage, des distances entre la position du point de la deuxième image du couple et la position théorique de ce point de la deuxième image du couple.

Le calibrage peut aussi comprendre pour chaque point de calibrage et pour chaque image de l'environnement acquise pour le calibrage:
- un calcul de la trajectoire d'un rayon lumineux issu du point de calibrage, réfléchi par le miroir, et projeté sur un troisième point de l'environnement,
- un calcul de la trajectoire d'un rayon lumineux issu du troisième point de l'environnement et imagé par un point de l'image de l'environnement acquise pour le calibrage,
le calibrage pouvant comprendre en outre une modification d'au moins un des paramètres de calcul, de manière à minimiser la somme, sur tous les points de calibrage, des distances entre la trajectoire du rayon lumineux projeté sur le troisième point de l'environnement et la trajectoire du rayon lumineux issu du troisième point de l'environnement.

Pour chacun des calibrages décrits ci-dessus, plus le nombre de points de calibrage est grand, et meilleur est le calibrage des paramètres. Les points de calibrage peuvent être répartis sur plusieurs images mères projetées successivement. De manière préférentielle, les images de l'environnement acquises pour le calibrage comprennent plusieurs images de l'environnement, la somme de ces images imageant l'environnement à 360 degrés autour d'un axe tel l'axe de rotation.

Des points de l'image mère peuvent être utilisés à la fois en tant que point de modélisation et en tant que point de calibrage. Ainsi, des premiers points de l'environnement, des deuxièmes points de l'environnement, et des troisièmes points de l'environnement peuvent être confondus. De même, des images de l'environnement peuvent être acquises à la fois pour la modélisation et pour le calibrage.

Dans ce document, un « point » peut avoir une surface différente de zéro. En effet, un « point » de l'image mère (comme un point de modélisation ou de calibrage) peut typiquement consister en au moins un pixel, de préférence un unique pixel. La taille d'un point de l'environnement et la taille d'un point d'une image de l'environnement dépendent par exemple de caractéristiques optiques du projecteur ou de la caméra (distances focales, ...), de la distance entre le projecteur et le point de l'environnement, etc...

De plus, on entend par « distance entre deux trajectoires » la longueur du plus court chemin rectiligne entre les deux trajectoires.

Le procédé selon l'invention comprend en outre une construction de l'image mère en fonction d'une position d'un observateur, et une modélisation de l'environnement tridimensionnel, de sorte que l'observateur observant de sa position la projection de l'image mère sur l'environnement observe une scène à partir d'un point de vue virtuel donné.

Enfin, le procédé selon l'invention peut comprendre en outre une mesure d'au moins une caractéristique radiométrique de l'environnement tridimensionnel, et une correction de l'image mère en fonction de l'au moins une caractéristique radiométrique mesurée.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 est une vue de profil d'un mode de réalisation de dispositif selon l'invention,
- la figure 2 est une vue de dessus de ce dispositif,
- la figure 3 illustre une image mère avant sa projection par ce dispositif, telle qu'elle est affichée sur la matrice du projecteur du dispositif,
- la figure 4 illustre six perspectives d'une scène, et
- la figure 5 illustre la construction de l'image mère de la figure 3, à partir des perspectives de la figure 4.

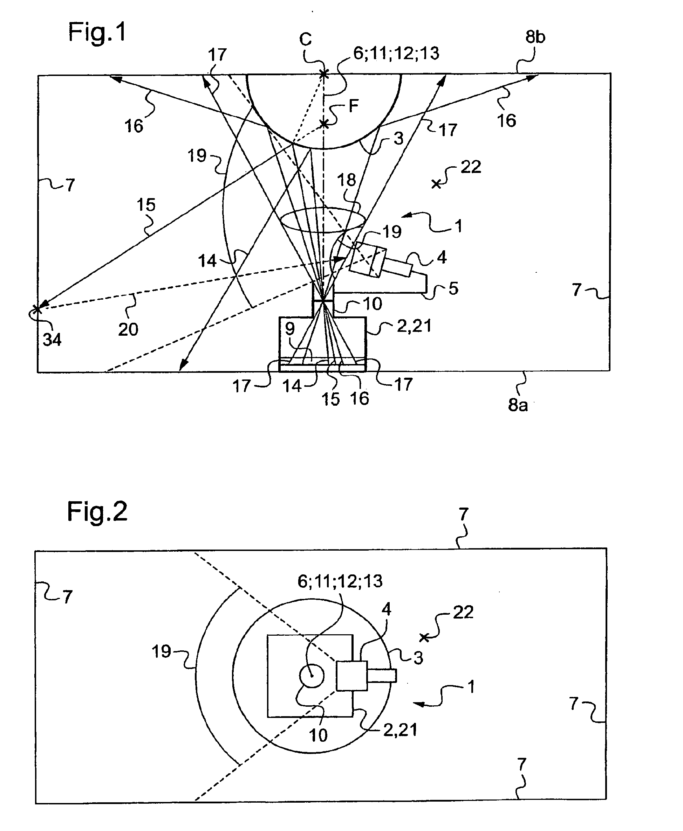

On va donc décrire, en référence aux figures 1 à 5, un mode de réalisation de dispositif 1 selon invention mettant en oeuvre un procédé selon l'invention.

Le dispositif 1 comprend un projecteur 2, un miroir convexe 3, une caméra 4, et des moyens de mise en rotation 5 de la caméra 4 autour d'un axe de rotation 6. Le dispositif 1 est entouré d'un environnement tridimensionnel comprenant différents éléments servant d'écran de projection, notamment des murs latéraux 7, un sol 8a, un plafond 8b d'une salle, ainsi que des objets compris dans la salle. Chacun de ces éléments peut ne pas être plan, comme par exemple un objet courbe, ou un plafond d'une cave.

Le fonctionnement du dispositif 1 est le suivant. On dispose initialement d'une scène que l'on veut projeter sur l'environnement tridimensionnel avec une impression oculaire désirée pour un observateur. Le dispositif 1 peut couvrir pratiquement tout l'espace de l'environnement en employant d'une part le projecteur vidéo 2 qui projette une image mère dans un faisceau angulairement limité, et d'autre part le miroir de reprise 3 placé en plafonnier et qui réfléchit le faisceau angulairement limité pour le diriger vers l'environnement tridimensionnel dans un angle solide de préférence aussi grand que possible.

Pour que la projection soit fidèle à l'impression oculaire désirée, le dispositif 1 tient compte des spécificités des écrans de projection: position, couleur, coefficients de réflexion, interaction des uns avec les autres.

Pour cela, il exploite des images captées par la caméra 4 d'acquisition qui enregistre l'environnement éclairé par différents fonds colorés ou primitives géométriques émis par une matrice du vidéo projecteur. Si la caméra tourne autour de l'axe optique d'émission du projecteur, alors elle pourra informer sur tous les objets qui servent d'écran de projection, avec les effets de parallaxe, et sans zone d'ombre.

Les informations recueillies par la caméra sont traitées et introduites en termes de correctif de l'image mère pour la modifier et générer une image mère corrigée qui portera, elle, les modifications nécessaires à une restitution fidèle de la scène sur les écrans, de sorte que l'observateur ait une impression d'observer cette scène avec l'impression oculaire désirée.

Le projecteur 2 est un projecteur vidéo matriciel, comprenant une matrice 9 de pixels sur laquelle est affichée l'image mère, et comprenant en outre un objectif 10. Le projecteur est agencé pour projeter via l'objectif 10 l'image mère le long d'un axe de projection 11 orthogonal au front d'onde de l'image projetée, la taille de l'image mère croissant au fur et à mesure de sa propagation le long de l'axe de projection 11 selon un premier angle solide de projection 18 centré sur l'axe de projection 11 et inférieur à 2π stéradians. Typiquement, le projecteur projette l'image mère dans un cône de projection ayant un angle au sommet de 30 degrés, c'est-à-dire dans un premier angle solide 18 de π/4 stéradians. L'axe optique 13 de l'objectif 10 passe sensiblement par le centre de la matrice 9, et est sensiblement confondu avec l'axe de projection 11.

Le miroir 2 est fixé au plafond 8b, la surface convexe du miroir 3 est orientée vers le projecteur 2, et l'objectif 10 est orienté vers le miroir 3, de sorte que la surface convexe du miroir 3 soit agencée pour réfléchir au moins en partie l'image mère projetée dans le premier angle solide par le projecteur, et pour projeter sur tout ou partie de l'environnement tridimensionnel et dans un deuxième angle solide la partie de l'image mère réfléchie. Ainsi, le dispositif 1 est un dispositif de projection catadioptrique, car il associe le projecteur vidéo matriciel 2 avec le miroir convexe 3 destiné à réfléchir l'image mère dans l'environnement tridimensionnel 7, 8a, 8b.

Sur l'exemple illustré sur la figure 1, la projection de l'image mère comprend une projection de plusieurs rayons lumineux 14 à 17. Le miroir 3 est agencé pour réfléchir une partie 14 à 16 de ces rayons lumineux. Le miroir 3 est agencé pour réfléchir certains de ces rayons 14 vers le sol 8a, des rayons projetés suffisamment proches de l'axe de projection 11 par le projecteur 2 étant même réfléchis par le miroir sur le projecteur 2. Le miroir 3 est aussi agencé pour réfléchir certains de ces rayons 15 vers les murs 7, et certains de ces rayons 16 vers le plafond 8b. Le miroir 3 est en outre agencé pour ne pas réfléchir une partie périphérique de l'image mère, les rayons lumineux 17 issus de cette partie de l'image mère étant directement projetés sur l'environnement tridimensionnel 7, 8a, 8b par le projecteur 2.

Le miroir 3 a une symétrie de révolution autour d'un axe de révolution 12. Le miroir 3 peut par exemple comprendre une portion de sphère dont la surface convexe est orientée vers le projecteur 2. Pour simplifier la géométrie du dispositif 1, l'axe de révolution 12 du miroir 3 est sensiblement confondu avec l'axe de rotation 6 de la caméra 4, l'axe de projection 11, et l'axe optique 13.

Grâce au miroir convexe 3, et contrairement à un dispositif de projection selon l'état de l'art, le dispositif 1 est agencé pour projeter l'image mère de façon panoramique autour de l'axe de projection 11. Le miroir peut par exemple projeter une image mère donnée dans un angle supérieur à 180 degrés autour de l'axe de projection 11. Par exemple, une image mère centrée sur l'axe de révolution 12 et donc de projection 11 est réfléchie puis projetée par le miroir à 360 degrés autour de l'axe de projection 11, c'est-à-dire tout autour de l'axe de projection. Par contre, pour une image mère qui, lorsqu'elle est affichée sur la matrice 9, n'occupe qu'une partie de la matrice sans couper ni entourer l'axe de révolution 12 et donc de projection 11, cette image mère est réfléchie puis projetée par le miroir 3 dans un angle pouvant avoir n'importe quelle valeur inférieure à 360 degrés autour de l'axe de projection. En fonction de l'image mère, cette image mère peut donc être projetée sur un seul ou sur tous les murs latéraux.

Le miroir 3 est positionné par rapport au projecteur 2 de sorte que le premier angle solide de projection 18 englobe la surface convexe du miroir 3. Le miroir 3 est agencé pour projeter l'image mère dans un deuxième angle solide, la taille de l'image mère croissant au fur et à mesure de sa propagation depuis le miroir vers l'environnement selon le deuxième angle solide. Dans le cas particulier où l'axe de révolution 12 et l'axe de projection 11 sont sensiblement confondus, le deuxième angle solide est lui aussi centré sur l'axe de projection 11. Le deuxième angle solide peut avoir n'importe quelle valeur entre 0 et 4π stéradians, la valeur du deuxième angle solide dépendant notamment de la position de l'image mère par rapport à l'axe de révolution du miroir ou l'axe de projection, et de la taille de l'image mère sur la matrice 9. Pour une image mère centrée sur l'axe de révolution du miroir, et donc sur la matrice 9, ce deuxième angle solide est typiquement supérieur à 2π stéradians. Tel qu'illustré sur la figure 1, le deuxième angle solide peut même être légèrement inférieur à 4π stéradians, le miroir étant agencé pour réfléchir puis projeter l'image mère du sol 8a jusqu'au plafond 8b. L'image mère peut donc être projetée sur tous les murs latéraux, le sol et le plafond de la salle. Sur la figure 1, le deuxième angle solide est délimité par les parties, situées entre le miroir 3 et le plafond 8b, des rayons lumineux 16.

La caméra 4 et les moyens de mise en rotation 5 de la caméra autour de son axe de rotation 6 permettent d'acquérir des images de l'environnement tridimensionnel 7, 8a, 8b. La caméra peut être une caméra CCD reliée à une carte d'acquisition, ou bien une webcam à liaison USB, ou encore un simple appareil photo numérique à liaison USB ou hertzienne (Bluetooth ou WIFI). La mise en rotation de la caméra peut être assurée par un moteur de type pas à pas, la transmission entre le moteur et un mouvement de la caméra autour de son axe 6 est assurée par tout moyen de transmission, par exemple une courroie de synchronisation, et le guidage en rotation de la caméra est assuré par un ensemble mécanique, par exemple un roulement de gros diamètre entourant l'axe de projection 11, et laissant passer les rayons lumineux de l'image mère projetée par le projecteur. Pour une position de la caméra autour de son axe, la caméra reçoit directement des rayons lumineux 20 émis par l'environnement et non réfléchis par le miroir. À partir de ces rayons lumineux 20, la caméra acquiert donc une image d'une partie de l'environnement tridimensionnel, c'est-à-dire d'une partie des murs 7, du sol 8a, du plafond 8b, et de certains des objets contenus dans la salle.

La caméra 4 et les moyens de mise en rotation 5 forment des moyens d'acquisition omnidirectionnelle de l'environnement tridimensionnel, ces moyens d'acquisition pouvant acquérir des images de parties de l'environnement tridimensionnel réparties sur plus de 180 degrés autour de l'axe de projection 11. Par exemple, une rotation de la caméra 4 de 360 degrés autour de son axe de rotation 6 permet d'acquérir des images de l'environnement tridimensionnel tout autour de l'axe de rotation 6, et donc tout autour de l'axe de projection 11. Cependant, il peut exister des angles morts, c'est-à-dire des parties de l'environnement tridimensionnel ne pouvant être vues par la caméra, par exemple des parties du sol 8a cachées par le projecteur 2, ou des parties du plafond 8b cachées par le miroir 3. Pour limiter ces angles morts la caméra possède un champ de vue 19 relativement large, typiquement de l'ordre de 90 degrés et donc une distance focale très courte. De même, pour limiter ces angles morts, la caméra est placée entre le projecteur 2 et le miroir 3, de sorte que l'axe optique de la caméra soit sensiblement perpendiculaire à l'axe de projection 11, ou soit légèrement incliné par rapport à la perpendiculaire à l'axe de projection. Enfin, toujours pour limiter ces angles morts, les moyens de mise en rotation 5 peuvent être agencés pour réaliser une série de rotations successives de la caméra 4 à 360 degrés autour de l'axe de rotation 6, et pour modifier pour chacune de ces rotations successives l'inclinaison de la caméra par rapport à la perpendiculaire à l'axe de projection 11 ou de rotation.

La caméra est donc agencée pour percevoir l'environnement tridimensionnel. Le dispositif 1 comprend en outre des moyens de calcul 21 reliés à la caméra 4. Ces moyens de calcul comprennent typiquement des moyens pour mettre en oeuvre des algorithmes ou des logiciels, comme par exemple un processeur, une unité centrale d'un ordinateur, ou une carte électronique. Ces moyens de calcul sont agencés pour prendre en compte une perception de l'environnement tridimensionnel par la caméra 4, puis pour effectuer sur l'image mère différents types de correction en fonction de la perception de l'environnement tridimensionnel.

Tout d'abord, les moyens de calcul sont agencés pour modéliser l'environnement tridimensionnel à partir d'une ou plusieurs images de l'environnement acquises par la caméra. Plus le nombre d'images utilisées pour la modélisation est grand, ou plus ces images sont réparties autour de l'axe de rotation 6, et plus la partie de l'environnement tridimensionnel pouvant être modélisée est grande. Les moyens de calcul sont agencés pour construire en trois dimensions une modélisation de l'environnement par triangulation entre le miroir 3 et les moyens d'acquisition 4, 5. Les moyens de calcul sont en outre agencés pour calculer, à partir de la modélisation, une distorsion à appliquer à l'image mère en fonction d'une position d'un observateur 22, de sorte que l'observateur observant de sa position la projection de l'image mère sur l'environnement tridimensionnel observe une scène à partir d'un point de vue virtuel donné. Les moyens de calcul permettent donc de construire l'image mère pour donner à l'observateur l'illusion d'un point de vue virtuel.

D'autre part, la caméra comprend des moyens pour mesurer au moins une caractéristique radiométrique de l'environnement tridimensionnel, telles des caractéristiques colorimétriques ou des fonctions de réflectance de l'environnement tridimensionnel. Les moyens de calcul sont en outre agencés pour corriger l'image mère en fonction des caractéristiques radiométriques mesurées, pour que l'observateur 22 observe la projection de l'image mère sur l'environnement avec des rendus colorimétriques et des intensités lumineuses désirés. Ainsi, les moyens de calcul permettent de restituer fidèlement l'image mère du point de vue colorimétrique et de l'intensité lumineuse, en tenant compte notamment de la couleur, de la texture, et de la réflectance de chaque élément de l'environnement tridimensionnel sur lequel l'image mère est projetée, et en tenant compte aussi des sources lumineuses présentes dans l'environnement tridimensionnel.

Un procédé mis en oeuvre dans le dispositif 1 comprend les étapes suivantes :
- une projection, par le projecteur 2, de l'image mère le long de l'axe optique de projection 11,
- une réflexion de l'image mère par le miroir 3, et
- une projection sur l'environnement tridimensionnel de l'image mère réfléchie par le miroir 3.

Comme indiqué précédemment, le miroir projette l'image mère de préférence de façon panoramique, par exemple dans un angle A supérieur à 180 degrés autour de l'axe de projection, voire même à 360 degrés autour de l'axe de projection 11 c'est-à-dire sur tous les murs 7 de la salle. En pratique, cet angle A peut avoir n'importe quelle valeur comprise entre zéro et 360 degrés, cette valeur dépendant de la taille de l'image mère au niveau de la matrice 9, et de la position de l'image mère sur la matrice 9.

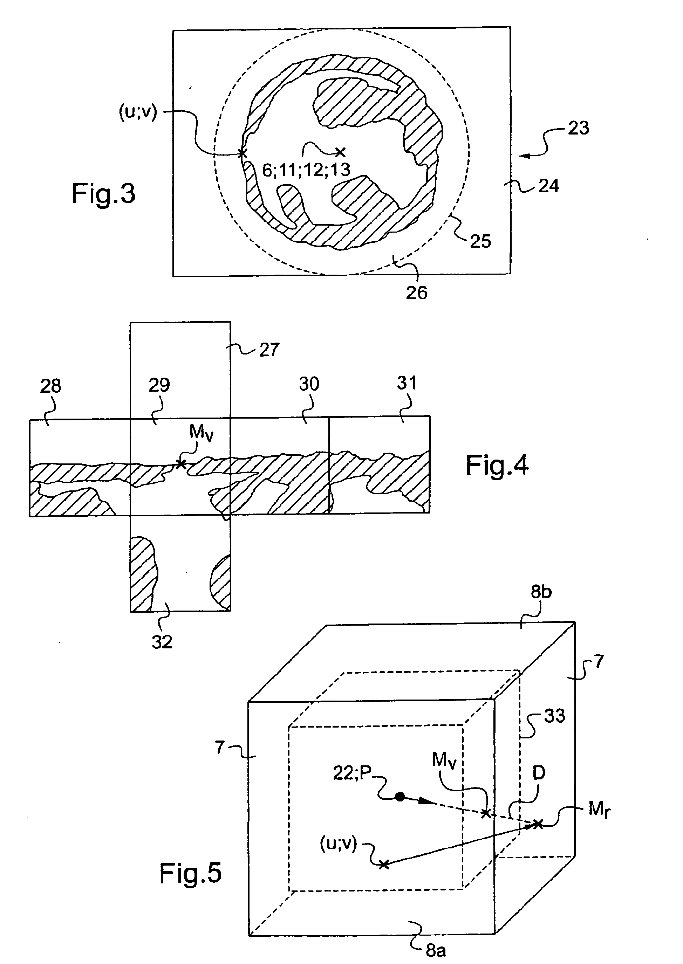

La figure 3 illustre un exemple d'image mère 23 telle qu'elle est affichée sur la matrice 9 du projecteur 2. L'image mère 23 est centrée sur la matrice 9, et est donc coupée sensiblement en son milieu par l'axe de projection 11. Une partie 24 située en périphérie de l'image mère 23, en dehors d'une ligne fermée 25 (représentée en pointillés), n'est pas réfléchie par le miroir 3 après avoir été projetée par le projecteur 2, mais est directement projetée sur l'environnement tridimensionnel par le projecteur 2. Les rayons lumineux 17 issus des pixels de cette partie 24 ne rencontrent pas le miroir 3 et sont directement projetés sur le plafond 8b. Cette partie 24 de l'image peut être exploitée ou éteinte ; en pratique on a plutôt tendance à éteindre la partie 24 de la matrice qui est en incidence directe sur l'environnement et à se limiter à l'éclairage du miroir seul. L'autre partie 26 de l'image mère 23, située à l'intérieur de la ligne 25, est projetée par le projecteur 2 puis réfléchie par le miroir 3 sur l'environnement tridimensionnel. La forme de la ligne 25 dépend de la forme du miroir 3. Dans le cas où le miroir convexe à une forme de révolution, telle une portion de sphère, la ligne fermée 25 est un cercle. L'image mère 23 est projetée sur l'environnement tridimensionnel par le projecteur 2 dans le deuxième angle solide supérieur à 2π stéradians, voire même sensiblement égal ou légèrement inférieur à 4π stéradians.

Le procédé comprend en outre une construction de l'image mère 23 en fonction d'une position de l'observateur 22, de sorte que l'observateur 22 observant de sa position la projection de l'image mère sur l'environnement observe une scène à partir d'un point de vue virtuel P.

Cette construction est réalisée de la manière suivante.

La scène est stockée dans le projecteur 2 par des moyens de stockage, sous la forme de six perspectives 27 à 32 illustrées sur la figure 4. Toutes ces perspectives sont des vues de la scène à partir du point de vue P, ces perspectives étant des vues de la scène selon les six directions portées par les trois axes d'un repère orthogonal tridimensionnel. Ces six perspectives sont chacune contenues dans un carré, de sorte que, en plaçant ces six perspectives sur les six faces intérieures d'un cube 33 illustré sur la figure 5, l'observateur placé au centre de ce cube observe la scène à partir du point de vue P. Ces perspectives peuvent être des photographies d'un paysage réel, ou peuvent être des images de synthèse.

Les six perspectives sont ensuite traitées par un algorithme mis en oeuvre par les moyens de calcul 21, de manière à participer à la construction de l'image mère 23 projetée par le projecteur 2. Pour cela, les moyens de calcul utilisent une modélisation de l'environnement tridimensionnel, comprenant une détermination des coordonnées, dans le référentiel lié au projecteur 2, de points de l'environnement sur lesquels l'image mère est projetée. Cette modélisation permet, pour chaque point ou pixel de l'image mère 23, une création d'une table de correspondance entre les coordonnées (u, v) du pixel dans l'image mère 23, les coordonnées du point Mᵣ de l'environnement tridimensionnel sur lequel ce pixel est projeté, et la direction de la droite D reliant le point Mᵣ et la position de l'observateur 22, puis d'associer à ce pixel la couleur et la luminosité d'un point Mᵥ, ce point Mᵥ étant un point d'une des six perspectives 27 à 32 et étant positionné à l'intersection du cube 33 et de la droite la droite D, le cube 33 étant positionné dans l'environnement 7, 8a, 8b de sorte que son centre, c'est-à-dire le point de vue P, soit sensiblement confondu avec la position de l'observateur 22.

La position de l'observateur peut être définie par défaut comme étant la position du projecteur 2, ou peut-être quelconque et définie par un utilisateur par des moyens de saisie ou déterminée par des moyens pour localiser l'observateur.

Dans un mode de réalisation, les coordonnées des points de l'environnement sur lesquels les points de l'image mère sont projetés sont définies par un utilisateur, par exemple grâce à des moyens de saisie permettant à l'utilisateur de définir les dimensions de la salle dans laquelle se trouve le dispositif 1, et permettant de définir la position du projecteur 2 et du miroir 3 dans cette salle.

Dans un autre mode de réalisation, la géométrie de l'environnement est connue par une source d'information externe, comprenant des capteurs optiques tels laser ou ultrasons.

Enfin, dans un dernier mode de réalisation de procédé selon l'invention, la modélisation de l'environnement comprend :
- une projection, par le projecteur, d'une image mère de modélisation comprenant au moins un point de modélisation ;
- une réflexion de l'image mère de modélisation par le miroir 3;
- une projection sur l'environnement tridimensionnel de l'image mère de modélisation réfléchie par le miroir 3 ; et
- une acquisition d'au moins une image de l'environnement acquise pour la modélisation, ces images de l'environnement étant de préférence acquises pour différentes positions angulaires de la caméra 4 autour de l'axe de rotation 6; et
- pour chaque point de modélisation et pour chaque image de l'environnement acquise pour la modélisation:
   ■ une association du point de modélisation avec un point de l'image de l'environnement acquise pour la modélisation, ce point de l'image de l'environnement imageant un premier point de l'environnement 34 sur lequel est projeté le point de modélisation,
   ■ un calcul de la trajectoire d'un rayon lumineux 15 issu du point de modélisation, réfléchi par le miroir, et projeté sur le premier point de l'environnement,
   ■ un calcul de la trajectoire d'un rayon lumineux 20 issu du premier point de l'environnement 34 et imagé par le point de l'image de l'environnement acquise pour la modélisation, et
   ■ un calcul d'une intersection de la trajectoire du rayon lumineux 15 issu du point de modélisation et de la trajectoire du rayon lumineux 20 issu du premier point de l'environnement 34, les coordonnées du point d'intersection entre ces deux trajectoires étant sensiblement les coordonnées du premier point de l'environnement.

Grâce à plusieurs points de modélisation, on obtient ainsi les coordonnées de plusieurs premiers points de l'environnement.

Les trajectoires calculées sont simples, car constituées de droites ou de portions de droites dans le cas de l'optique géométrique. Les calculs de trajectoire dépendent de paramètres de calcul, qui seront décrits plus en détail par la suite.

En pratique, du fait d'éventuelles imperfections de la connaissance de ces paramètres de calcul, la trajectoire calculée du rayon lumineux 15 issu du point de modélisation et la trajectoire calculée du rayon lumineux 20 issu du premier point de l'environnement ne s'intersectent pas, mais sont très proches à un endroit. Par approximation, les coordonnées du milieu du segment le plus court reliant ces deux trajectoires sont considérées comme les coordonnées du point d'intersection entre ces deux trajectoires.

La modélisation permet ainsi, pour chaque point de modélisation de coordonnées (u, v) sur l'image mère 23, et donc par extension pour chaque pixel de coordonnées (u, v) sur l'image mère 23, de créer la table de correspondance entre les coordonnées (u, v) de ce point de modélisation ou pixel, les coordonnées du premier point de l'environnement 34 (ou Mᵣ) sur lequel ce point de modélisation ou pixel est projeté, et la direction de la droite D reliant ce point de modélisation 34 et la position de l'observateur 22. Toutes ces coordonnées et directions sont de préférence exprimées dans le référentiel du projecteur 2.

L'association peut par exemple être effectuée en ne projetant pas d'image mère, la caméra observant une image de l'environnement neutre, puis en projetant une image mère comprenant un unique point de modélisation, la caméra observant une autre image de l'environnement correspondant à l'image neutre à laquelle s'ajoute le signal du point de modélisation réfléchi par le miroir, projeté sur l'environnement, et réémis vers la caméra. Dans une variante, l'association peut par exemple être effectuée en projetant une image mère comprenant plusieurs points de modélisation répartis selon une répartition particulière, de sorte qu'une image de l'environnement acquise pour la modélisation comprenne plusieurs points reproduisant sensiblement et au moins en partie cette répartition, chacun de ces points de l'image de l'environnement pouvant alors facilement être associé à un des points de modélisation.

Plus la densité de points de modélisation sur l'image mère est grande, meilleure est la résolution de la modélisation de l'environnement tridimensionnel. Si pour la modélisation, chaque image mère ne comprend qu'un point de modélisation, la modélisation comprend des projections successives d'images mères ayant chacune un point de modélisation différent, la résolution de la modélisation augmentant avec le nombre d'images mères successives projetées.

De préférence, les images de l'environnement acquises pour la modélisation sont réalisées pour différentes positions angulaires voisines de la caméra. En effet, une seule image de l'environnement n'image pas nécessairement tous les points de l'environnement sur lesquels sont projetés tous les points de modélisation. Ces positions angulaires voisines sont de préférence réparties sur 360 degrés autour de l'axe de rotation, de sorte que deux images acquises pour deux positions angulaires voisines imagent une partie commune de l'environnement tridimensionnel. Ainsi, la modélisation permet de modéliser sur 360 degrés autour de l'axe de rotation 6, et permet donc de modéliser la totalité de l'environnement tridimensionnel, ou la quasi-totalité de l'environnement s'il existe des angles morts.

Ainsi, les coordonnées tridimensionnelles des points de l'environnement sur lesquels l'image mère est projetée peuvent être obtenus dans le référentiel lié au projecteur 2 en procédant par triangulation entre le miroir 3 d'un côté et la caméra 4 de l'autre. En effet, une connaissance de paramètres du dispositif 1 permet de calculer les équations des trajectoires des rayons issus du miroir 3 et les équations des trajectoires des rayons captés par la caméra, et le calcul de leurs intersections. L'environnement tridimensionnel peut donc être totalement modélisé, soit par une approche non structurée de type nuage de points de modélisation, soit par une approche de type de maillage. Ce dernier cas suppose de projeter des points de modélisation de manière ordonnée pour savoir comment relier les points de l'environnement 34 obtenus. Il est aussi possible d'analyser un nuage de points de l'environnement pour reconnaître des portions de plan ou d'autres formes géométriques.

Comme il a été dit précédemment, les calculs de trajectoire sont de simples calculs d'optique géométrique qui dépendent de paramètres de calcul. Ces calculs sont de préférence effectués dans le référentiel du projecteur 2.

Par exemple, le calcul de la trajectoire d'un rayon lumineux 15 issu d'un point de modélisation, réfléchi par le miroir, et projeté sur le premier point de l'environnement 34, dépend notamment des paramètres suivants :
- la position du point de modélisation sur la matrice 9, ce point comprenant de préférence un unique pixel, ou pouvant comprendre un groupe de pixels assemblés,
- la dimension de la matrice 9 et la résolution en pixels de la matrice 9,
- la position relative de la matrice 9 par rapport à l'objectif 10 ; en particulier, l'axe de projection 11 et l'axe optique 13 de l'objectif 10 passent sensiblement par le milieu de la matrice 9, mais il est possible qu'il existe un léger décalage ou inclinaison entre ce centre et ces axes 11, 13, ce décalage et cette inclinaison devant être connus ou estimés,
- la distance focale de l'objectif 10,
- les distorsions ou aberrations optiques de l'objectif 10,
- la géométrie et les dimensions du miroir 3,
- la position relative du projecteur 2 par rapport au miroir 3, notamment la distance et l'alignement entre le projecteur 2 et le miroir 3 ; en effet, l'axe de projection 11 et l'axe de révolution 12 sont sensiblement confondus, mais il est possible qu'il existe un léger décalage et/ou inclinaison entre ces deux axes 11, 12, ce décalage et cette inclinaison devant être connus ou estimés.

De même, le calcul de la trajectoire d'un rayon lumineux 20 issu du premier point de l'environnement 34 dépend notamment des paramètres suivants :
- la distance focale de la caméra 4,
- pour le capteur de la caméra, les dimensions et la résolution du capteur sur lequel est imagé l'environnement tridimensionnel,
- les distorsions ou aberrations optiques de la caméra 4,
- la position relative de la caméra par rapport au projecteur 2 durant l'acquisition de la première image ; la position angulaire de la caméra 4 doit être connue, le pas de rotation de la caméra autour de son axe 6 pouvant par exemple être déduit du pas du moteur servant à la mise en rotation de la caméra ; de plus, l'axe de projection 11 et l'axe de rotation 6 sont sensiblement confondus, mais il est possible qu'il existe un léger décalage et/ou inclinaison entre ces deux axes 11, 6, ce décalage et cette inclinaison devant être connus ou estimés.

Pour pouvoir réaliser l'étape de modélisation décrite précédemment, tous ces paramètres doivent être connus. Certains de ces paramètres peuvent être mémorisés par des moyens de mémorisation. Par exemple les distances focales, les dimensions et les résolutions de la caméra et de la matrice 9 peuvent être fournies par un constructeur. Les distorsions ou aberrations de la caméra ou de l'objectif 10 peuvent par exemple être connues au moyen de mires.

Cependant, il peut être nécessaire de mesurer les positions relatives du miroir 3, de la caméra 4, et du mouvement de rotation de la caméra par rapport au projecteur 2. En effet, un utilisateur peut réaliser des alignements approximatifs des axes de rotation 6, de projection 11, de révolution 12.

Cependant, la précision de ces alignements est généralement insuffisante pour connaître les transformations entre les référentiels liés au projecteur, au miroir et à la caméra, et est donc insuffisante pour réaliser correctement les calculs de trajectoire.

Le procédé selon l'invention comprend donc de préférence une optimisation ou calibrage des paramètres de calcul.

Le principe général du calibrage consiste à projeter sur l'environnement tridimensionnel des points de calibrage, ayant des positions connues dans l'image mère, et d'en déduire certains des paramètres à partir des coordonnées des projections des points de calibrage dans une image acquise par la caméra pour une position angulaire connue. Les points de calibrage peuvent être répartis sur l'image mère sous la forme d'un nuage de points ou sous la forme de lignes. Le calibrage ne fait à aucun moment appel aux coordonnées tridimensionnelles des points de l'environnement sur lesquels les points de calibrage sont projetés, ce qui le rend indépendant de la géométrie de l'environnement tridimensionnel. Il ne s'agit pas non plus de détecter des points caractéristiques de l'environnement comme le font les méthodes classiques de calibrage en stéréovision, mais de se servir du projecteur 2 pour les créer.

Cela présente l'avantage de pouvoir projeter des points de calibrage suffisamment contrastés, par exemple des points de calibrage clairs sur fond sombre, pour pouvoir être détectés par la caméra quelque soit la nature des matériaux de l'environnement. Une procédure d'images soustraites permet d'augmenter le contraste du dispositif 1 de façon très significative, en s'affranchissant des différences de matériaux et de lumière ambiante de l'environnement. La procédure d'images soustraites comprend typiquement une soustraction, à une image acquise par la caméra pendant la projection d'une image mère comprenant des points de calibrage, d'une image acquise par la caméra pendant la projection d'une image mère ne comprenant pas de points de calibrage. Dans ce but, la caméra comprend de préférence des moyens de contrôle automatique de gain, pour rester dans la gamme de linéarité du capteur de la caméra en évitant les saturations qui pénalisent la soustraction.

Le calibrage comprend alors une projection d'une image mère comprenant au moins un point de calibrage, et une acquisition d'au moins une image de l'environnement acquise pour le calibrage.

Les images de l'environnement acquises pour le calibrage peuvent comprendre au moins un couple d'images différentes mais qui imagent une partie commune de l'environnement, un premier type de calibrage comprenant pour chaque point de calibrage et pour chaque couple d'images:
- une association du point de calibrage avec un point de la première image du couple et avec un point de la deuxième image du couple, le point de la première image du couple et le point de la deuxième image du couple imageant un deuxième point de l'environnement sur lequel est projeté le point de calibrage,
- un calcul d'une position théorique du point de la deuxième image du couple, à partir de la position du point de la première image du couple, et des paramètres de calcul,
- un calcul d'une distance entre la position du point de la deuxième image du couple et la position théorique de ce point de la deuxième image du couple.
Cette séquence d'étapes est suivie d'une modification d'au moins un des paramètres de calcul, et un nouveau calcul des positions théoriques, de manière à minimiser la somme, sur tous les points de calibrage, des distances entre la position du point de la deuxième image du couple et la position théorique de ce point de la deuxième image du couple.

Ainsi, à partir d'acquisitions d'images pour différentes positions angulaires de la caméra, ces images imageant des points de l'environnement régulièrement répartis dans l'environnement tridimensionnel, et en exploitant une redondance des points de l'environnement entre deux images consécutives, on peut optimiser les paramètres de calcul en minimisant la distance quadratique entre les points d'une image acquise par la caméra et la position théorique des points d'une image successive après rotation.

Ce premier type de calibrage permet en particulier d'optimiser des paramètres de distorsion de la caméra, et des paramètres de transformation rigide du référentiel de la caméra 4 par rapport au référentiel de l'axe de rotation 6, tel l'angle entre l'axe optique de la caméra 4 et l'axe de rotation 6.

Un deuxième type de calibrage peut comprendre, pour chaque point de calibrage et pour chaque image de l'environnement acquise pour le calibrage:
- un calcul de la trajectoire d'un rayon lumineux issu du point de calibrage, réfléchi par le miroir, et projeté sur un troisième point de l'environnement,
- un calcul de la trajectoire d'un rayon lumineux issu du troisième point de l'environnement et imagé par un point de l'image de l'environnement acquise pour le calibrage,
- un calcul d'une distance entre la trajectoire du rayon lumineux projeté sur le troisième point de l'environnement et la trajectoire du rayon lumineux issu du troisième point de l'environnement.
Cette séquence d'étapes est suivie d'une modification d'au moins un des paramètres de calcul, et de nouveaux calculs des trajectoires des rayons issus des points de calibrage et des trajectoires des rayons imagés par des points de l'au moins une image de l'environnement acquise pour la calibrage, de manière à minimiser la somme, sur tous les points de calibrage, des distances entre la trajectoire du rayon lumineux projeté sur le troisième point de l'environnement et la trajectoire du rayon lumineux issu du troisième point de l'environnement.

Autrement dit on maximise, sur tous les points de calibrage, le nombre d'intersections entre la trajectoire du rayon lumineux projeté sur le troisième point de l'environnement et la trajectoire du rayon lumineux issu du troisième point de l'environnement.

Ce deuxième type de calibrage permet d'optimiser en particulier des valeurs pour :
- des paramètres de transformation rigide entre le référentiel du miroir 3 et le référentiel du projecteur 2, comme par exemple la distance entre le miroir et le projecteur, et un décalage ou une inclinaison entre l'axe de révolution 12 du miroir et l'axe de projection 11 ;
- des paramètres de transformation rigide entre le référentiel de l'axe de rotation 6 de la caméra 4, et le référentiel du projecteur 2, comme par exemple la distance entre la caméra 4 et l'axe de projection 11, l'inclinaison entre l'axe optique de la caméra 4 et l'axe de projection 11, et un décalage ou une inclinaison entre l'axe de rotation 6 et l'axe de projection 11.

Pour le premier et le deuxième type de calibrage, plus le nombre de points de calibrage sur l'image mère est grand, meilleure est l'optimisation des paramètres.

Enfin, le procédé selon l'invention peut comprendre une mesure d'au moins une caractéristique radiométrique de l'environnement tridimensionnel, et une correction de l'image mère en fonction d'au moins une caractéristique radiométrique mesurée. La correction peut comprendre une correction colorimétrique ou en intensité de l'image mère. Ainsi, l'association du projecteur et de la caméra permet une comparaison de la couleur et de l'intensité réfléchies par l'environnement tridimensionnel avec une couleur et une intensité attendues de la projection de l'image mère sur l'environnement tridimensionnel. Cela permet d'appréhender la restitution des couleurs par l'environnement, et d'assurer la fidélité de la projection de l'image mère sur l'environnement par rapport à la scène ayant servi de base de construction pour l'image mère.

Bien sûr, l'invention n'est pas limitée aux exemples qui viennent d'être décrits et de nombreux aménagements peuvent être apportés à ces exemples sans sortir du cadre de l'invention.

En particulier, les axes de rotation 6, de projection 11, de révolution 12 et l'axe optique 13 peuvent ne pas être sensiblement confondus. Les calculs des trajectoires des rayons lumineux émis par le projecteur et des trajectoires des rayons lumineux émis par les points de l'environnement sont alors plus complexes, car ils doivent prendre en compte d'importants décalages et/ou inclinaisons entre ces axes, la modélisation de l'environnement tridimensionnel et la construction de l'image mère étant par conséquence elles aussi plus complexes.

De plus, la surface convexe du miroir 3 n'a pas forcément une forme de portion de sphère, cette forme de portion de sphère rendant la résolution verticale du dispositif 1 inhomogène. En effet, dans le dispositif 1 venant d'être décrit, plus un pixel est éloigné du centre de la matrice 9, plus la portion du miroir réfléchissant les rayons lumineux 14 à 16 émis par ce pixel est importante, et plus la taille du point de l'environnement sur lequel est projeté ce rayon est grande. On utilise donc de préférence un profil de miroir 3 qui tend à homogénéiser la résolution verticale du dispositif 1 par rapport à un miroir sphérique.

## Revendications

1. Procédé de projection, comprenant :
- une projection d'une image mère (23) le long d'un axe de projection (11),
- une réflexion d'au moins une partie de l'image mère par un miroir convexe (3),
- une projection sur un environnement tridimensionnel (7, 8a, 8b) de l'image mère réfléchie par le miroir convexe,
- une acquisition d'au moins une image de l'environnement tridimensionnel,
- une modélisation de l'environnement tridimensionnel à partir de l'au moins une image de l'environnement tridimensionnel, et **caractérisé en ce qu'** il comprend en outre
- une construction de l'image mère en fonction d'une position d'un observateur (22) et de la modélisation de l'environnement tridimensionnel, de sorte que l'observateur observant de sa position la projection de l'image mère sur l'environnement observe une scène à partir d'un point de vue virtuel (P).

2. Procédé selon la revendication 1, **caractérisé en ce que** l'acquisition d'une image comprend :
- un positionnement d'une caméra (4) à une position angulaire autour d'un axe de rotation (6), et
- une acquisition d'une image de l'environnement pour cette position angulaire de la caméra, à partir de rayons lumineux (20) émis par l'environnement tridimensionnel.

3. Procédé selon la revendications 1 ou 2, **caractérisé en ce que** l'image mère comprend au moins un point de modélisation, l'acquisition d'image comprenant une acquisition d'au moins une image de l'environnement acquise pour la modélisation, la modélisation comprenant pour chaque point de modélisation et pour chaque image de l'environnement acquise pour la modélisation :
- un calcul de la trajectoire d'un rayon lumineux (15) issu du point de modélisation, réfléchi par le miroir, et projeté sur un premier point de l'environnement,
- un calcul de la trajectoire d'un rayon lumineux (20) issu du premier point de l'environnement (34) et imagé par un point de l'image de l'environnement acquise pour la modélisation, et
- un calcul d'une intersection de la trajectoire du rayon lumineux (15) issu du point de modélisation et de la trajectoire du rayon lumineux (20) issu du premier point de l'environnement (34).

4. Procédé selon la revendication 3, **caractérisé en ce que** les calculs de trajectoires dépendent de paramètres de calcul, **en ce qu'**il comprend un calibrage des paramètres, **en ce que** l'image mère comprend au moins un point de calibrage, et **en ce que** l'acquisition d'image comprend une acquisition d'au moins une image de l'environnement acquise pour le calibrage.

5. Procédé selon la revendication 4, **caractérisé en ce que** les images de l'environnement acquises pour le calibrage comprennent au moins un couple d'images différentes mais qui imagent une partie commune de l'environnement, le calibrage comprenant pour chaque point de calibrage et pour chaque couple d'images :
- une association du point de calibrage avec un point de la première image du couple et avec un point de la deuxième image du couple, le point de la première image du couple et le point de la deuxième image du couple imageant un deuxième point de l'environnement sur lequel est projeté le point de calibrage,
- un calcul d'une position théorique du point de la deuxième image du couple, à partir de la position du point de la première image du couple, et des paramètres de calcul.

6. Procédé selon la revendication 5, **caractérisé en ce que** le calibrage comprend en outre une modification d'au moins un des paramètres de calcul, de manière à minimiser la somme, sur tous les points de calibrage, des distances entre la position du point de la deuxième image du couple et la position théorique de ce point de la deuxième image du couple.

7. Procédé selon l'une quelconque des revendications 4 à 6, **caractérisé en ce que** le calibrage comprend pour chaque point de calibrage et pour chaque image de l'environnement acquise pour le calibrage:
- un calcul de la trajectoire d'un rayon lumineux issu du point de calibrage, réfléchi par le miroir, et projeté sur un troisième point de l'environnement,
- un calcul de la trajectoire d'un rayon lumineux issu du troisième point de l'environnement et imagé par un point de l'image de l'environnement acquise pour le calibrage.

8. Procédé selon la revendication 7, **caractérisé en ce que** le calibrage comprend en outre une modification d'au moins un des paramètres de calcul, de manière à minimiser la somme, sur tous les points de calibrage, des distances entre la trajectoire du rayon lumineux projeté sur le troisième point de l'environnement et la trajectoire du rayon lumineux issu du troisième point de l'environnement .

9. Procédé selon l'une quelconque des revendications 1 à 8, **caractérisé en ce que** la position de l'observateur est définie par défaut comme étant la position du projecteur (2).

10. Procédé selon l'une quelconque des revendications 1 à 8, **caractérisé en ce que** la position de l'observateur est déterminée par des moyens pour localiser l'observateur.

11. Procédé selon l'une quelconque des revendications précédentes, **caractérisé en ce que** le miroir projette l'image mère dans un angle solide supérieur à 2π stéradians, de préférence légèrement inférieur à 4π stéradians.

12. Procédé selon l'une quelconque des revendications précédentes, **caractérisé en ce que** le miroir projette l'image mère dans un angle supérieur à 180 degrés autour de l'axe de projection (11), de préférence sensiblement égal à 360 degrés autour de l'axe de projection.

13. Dispositif (1) de projection, comprenant :
- un projecteur (2) agencé pour projeter une image mère (23) le long d'un axe de projection (11),
- un miroir convexe (3) agencé pour réfléchir au moins en partie l'image mère et la projeter sur un environnement tridimensionnel (7, 8a, 8b),
- des moyens (4, 5) pour acquérir au moins une image de l'environnement tridimensionnel,
- des moyens (21) pour modéliser l'environnement tridimensionnel à partir d'au moins une image de l'environnement, et **caractérisé en ce qu'**il comprend en outre :
- des moyens (21) pour construire l'image mère en fonction d'une position d'un observateur (22) et d'une modélisation de l'environnement tridimensionnel, de sorte que l'observateur observant de sa position une projection de l'image mère sur l'environnement observe une scène à partir d'un point de vue virtuel (P).

14. Dispositif selon la revendication 13, **caractérisé en ce que** les moyens d'acquisition sont agencés pour acquérir au moins une image de l'environnement à partir de rayons lumineux (20) émis par l'environnement et non réfléchis par le miroir.

15. Dispositif selon la revendication 13 ou 14, **caractérisé en ce que** les moyens d'acquisition comprennent une caméra (4), et des moyens de mise en rotation (5) de la caméra autour d'un axe de rotation (6).

## Claims

1. Method of projection, comprising:
- a projection of a mother image (23) along an axis of projection (11),
- a reflection of at least one part of the mother image by a convex mirror (3),
- a projection onto a three-dimensional environment (7, 8a, 8b) of the mother image reflected by the convex mirror,
- acquiring at least one image of the three-dimensional environment,
- a modelling of the three-dimensional environment from the at least one image of the three-dimensional environment, and
**characterized in that** it further comprises:
- a construction of the mother image according to a position of an observer (22) and of the modelling of the three-dimensional environment, so that from his position, the observer observing the projection of the mother image onto the environment observes a scene from a virtual viewpoint (P).

2. Method according to claim 1, **characterized in that** the acquisition of an image comprises:
- positioning a camera (4) at an angular position about an axis of rotation (6), and
- acquiring an image of the environment for this angular position of the camera, from light rays (20) emitted by the three-dimensional environment.

3. Method according to claim 1 or 2, **characterized in that** the mother image comprises at least one modelling point, the image acquisition comprising acquiring at least one image of the environment acquired for the modelling, the modelling comprising for each modelling point and for each image of the environment acquired for the modelling:
- calculating the path of a light ray (15) originating from the modelling point, reflected by the mirror, and projected onto a first point of the environment,
- calculating the path of a light ray (20) originating from the first point of the environment (34) and imaged by a point of the image of the environment acquired for the modelling, and
- calculating an intersection of the path of the light ray (15) originating from the modelling point and the path of the light ray (20) originating from the first point of the environment (34).

4. Method according to claim 3, **characterized in that** the path calculations depend on calculation parameters, **in that** it comprises a calibration of the parameters, **in that** the mother image comprises at least one calibration point, and **in that** the image acquisition comprises acquiring at least one image of the environment acquired for the calibration.

5. Method according to claim 4, **characterized in that** the images of the environment acquired for the calibration comprise at least one pair of images which are different but which image a common part of the environment, the calibration comprising for each calibration point and for each pair of images:
- associating the calibration point with a point of the first image of the pair and with a point of the second image of the pair, the point of the first image of the pair and the point of the second image of the pair imaging a second point of the environment onto which the calibration point is projected,
- calculating a theoretical position of the point of the second image of the pair, from the position of the point of the first image of the pair, and the calculation parameters.

6. Method according to claim 5, **characterized in that** the calibration comprises moreover a modification of at least one of the calculation parameters, so as to minimize the sum, over all the calibration points, of the distances between the position of the point of the second image of the pair and the theoretical position of this point of the second image of the pair.

7. Method according to any one of claims 4 to 6, **characterized in that** the calibration comprises for each calibration point and for each image of the environment acquired for the calibration:
- calculating the path of a light ray originating from the calibration point, reflected by the mirror, and projected onto a third point of the environment,
- calculating the path of a light ray originating from the third point of the environment and imaged by a point of the image of the environment acquired for the calibration.

8. Method according to claim 7, **characterized in that** the calibration comprises moreover a modification of at least one of the calculation parameters, so as to minimize the sum, over all the calibration points, of the distances between the path of the light ray projected onto the third point of the environment and the path of the light ray originating from the third point of the environment.

9. Method according to any one of claims 1 to 8, **characterized in that** the position of the observer is defined by default as being the position of the projector (2).

10. Method according to any one of claims 1 to 8, **characterized in that** the position of the observer is determined by means of locating the observer.

11. Method according to any one of the previous claims, **characterized in that** the mirror projects the mother image within a solid angle larger than 2π steradians, preferably slightly smaller than 4π steradians.

12. Method according to any one of the previous claims, **characterized in that** the mirror projects the mother image within an angle larger than 180 degrees around the axis of projection (11), preferably substantially equal to 360 degrees around the axis of projection.

13. Projection device (1), comprising:
- a projector (2) arranged in order to project a mother image (23) along an axis of projection (11),
- a convex mirror (3) arranged in order to reflect the mother image at least in part and to project it onto a three-dimensional environment (7, 8a, 8b),
- means (4, 5) for acquiring at least one image of the three-dimensional environment,
- means (21) for modelling the three-dimensional environment based on at least one image of the environment, and
**characterized in that** it further comprises:
- means (21) for constructing the mother image according to a position of an observer (22) and of a modelling of the three-dimensional environment, so that from his position, the observer observing a projection of the mother image onto the environment observes a scene from a virtual viewpoint (P).

14. Device according to claim 13, **characterized in that** the acquisition means are arranged for acquiring at least one image of the environment from light rays (20) emitted by the environment and not reflected by the mirror.

15. Device according to claim 13 or 14, **characterized in that** the acquisition means comprise a camera (4), and means (5) for rotating the camera about an axis of rotation (6).

## Patentansprüche

1. Projektionsverfahren, umfassend:
- eine Projektion eines Hauptbildes (23) entlang einer Projektionsachse (11),
- eine Reflexion wenigstens eines Teils des Hauptbildes mittels eines konvexen Spiegels (3),
- eine Projektion des mittels des konvexen Spiegels reflektierten Hauptbildes auf eine dreidimensionale Umgebung (7, 8a, 8b),
- eine Aufnahme wenigstens eines Bildes der dreidimensionalen Umgebung,
- eine Modellierung der dreidimensionalen Umgebung anhand des wenigstens einen Bildes der dreidimensionalen Umgebung, und
**dadurch gekennzeichnet, dass** es ferner umfasst
- eine Konstruktion des Hauptbildes in Abhängigkeit einer Position eines Betrachters (22) und der Modellierung der dreidimensionalen Umgebung, so dass der Betrachter, der von seiner Position die Projektion des Hauptbildes auf die Umgebung betrachtet, eine Szene von einem virtuellen Aussichtspunkt (P) aus betrachtet.

2. Verfahren nach Anspruch 1, **dadurch gekennzeichnet, dass** die Aufnahme eines Bildes umfasst:
- ein Positionieren einer Kamera (4) in einer Winkelposition um eine Rotationsachse (6) und
- eine Aufnahme eines Bildes der Umgebung für diese Winkelposition der Kamera mittels durch die dreidimensionale Umgebung ausgesandter Lichtstrahlen (20).

3. Verfahren nach Anspruch 1 oder 2, **dadurch gekennzeichnet, dass** das Hauptbild wenigstens einen Modellierungspunkt umfasst, wobei die Bildaufnahme eine Aufnahme wenigstens eines für die Modellierung aufgenommenen Bildes der Umgebung umfasst, wobei die Modellierung für jeden Modellierungspunkt und für jedes für die Modellierung aufgenommene Bild der Umgebung umfasst:
- eine Berechnung des Weges eines von dem Modellierungspunkt ausgegangenen, durch den Spiegel reflektierten und auf einen ersten Punkt der Umgebung projizierten Lichtstrahls (15),
- eine Berechnung des Weges eines von dem ersten Punkt der Umgebung (34) ausgegangenen und durch einen Punkt des für die Modellierung aufgenommenen Bildes der Umgebung abgebildeten Lichtstrahls (20), sowie
- eine Berechnung eines Schnittpunktes des Weges des von dem Modellierungspunkt ausgegangenen Lichtstrahls (15) und des Weges des von dem ersten Punkt der Umgebung (34) ausgegangenen Lichtstrahls (20).

4. Verfahren nach Anspruch 3, **dadurch gekennzeichnet, dass** die Wegeberechnungen von Berechnungsparametern abhängen, dass es eine Kalibrierung der Parameter umfasst, dass das Hauptbild wenigstens einen Kalibrierungspunkt umfasst und dass die Bildaufnahme eine Aufnahme wenigstens eines für die Kalibrierung aufgenommenen Bildes der Umgebung umfasst.

5. Verfahren nach Anspruch 4, **dadurch gekennzeichnet, dass** die für die Kalibrierung aufgenommenen Bilder der Umgebung wenigstens ein Paar von unterschiedlichen Bildern, die jedoch einen gemeinsamen Teil der Umgebung abbilden, umfassen, wobei die Kalibrierung für jeden Kalibrierungspunkt und für jedes Bilderpaar umfasst:
- eine Verknüpfung des Kalibrierungspunktes mit einem Punkt des ersten Bildes des Paars und mit einem Punkt des zweiten Bildes des Paars, wobei der Punkt des ersten Bildes des Paars und der Punkt des zweiten Bildes des Paars einen zweiten Punkt der Umgebung, auf den der Kalibrierungspunkt projiziert wird, abbilden,
- eine Berechnung einer theoretischen Position des Punktes des zweiten Bildes des Paars, anhand der Position des Punktes des ersten Bildes des Paars sowie der Berechnungsparameter.

6. Verfahren nach Anspruch 5, **dadurch gekennzeichnet, dass** die Kalibrierung ferner eine Modifikation von wenigstens einem der Berechnungsparameter umfasst, um die Summe -an allen Kalibrierungspunkten- der Abstände zwischen der Position des Punktes des zweiten Bildes des Paars und der theoretischen Position dieses Punktes des zweiten Bildes des Paars zu minimieren.

7. Verfahren nach einem der Ansprüche 4 bis 6, **dadurch gekennzeichnet, dass** die Kalibrierung für jeden Kalibrierungspunkt und für jedes für die Kalibrierung aufgenommene Bild der Umgebung umfasst:
- eine Berechnung des Weges eines von dem Kalibrierungspunkt ausgegangenen, durch den Spiegel reflektierten und auf einen dritten Punkt der Umgebung projizierten Lichtstrahls,
- eine Berechnung des Weges eines von dem dritten Punkt der Umgebung ausgegangenen und durch einen Punkt des für die Kalibrierung aufgenommenen Bildes der Umgebung abgebildeten Lichtstrahls.

8. Verfahren nach Anspruch 7, **dadurch gekennzeichnet, dass** die Kalibrierung ferner eine Modifikation von wenigstens einem der Berechnungsparameter umfasst, um die Summe -an allen Kalibrierungspunkten- der Abstände zwischen dem Weg des auf den dritten Punkt der Umgebung projizierten Lichtstrahls und dem Weg des von dem dritten Punkt der Umgebung ausgegangenen Lichtstrahls zu minimieren.

9. Verfahren nach einem der Ansprüche 1 bis 8, **dadurch gekennzeichnet, dass** die Position des Betrachters standardmäßig als die Position des Projektors (2) definiert ist.

10. Verfahren nach einem der Ansprüche 1 bis 8, **dadurch gekennzeichnet, dass** die Position des Betrachters durch Mittel zum Lokalisieren des Betrachters bestimmt wird.

11. Verfahren nach einem der vorhergehenden Ansprüche, **dadurch gekennzeichnet, dass** der Spiegel das Hauptbild in einen Raumwinkel projiziert, der größer als 2Π Steradiant, vorzugsweise geringfügig kleiner als 4Π Steradiant ist.

12. Verfahren nach einem der vorhergehenden Ansprüche, **dadurch gekennzeichnet, dass** der Spiegel das Hauptbild in einem Winkel größer als 180 Grad um die Projektionsachse (11), vorzugsweise im Wesentlichen gleich 360 Grad um die Projektionsachse projiziert.

13. Projektionsvorrichtung (1), umfassend:
- einen Projektor (2), der angeordnet ist, um ein Hauptbild (23) entlang einer Projektionsachse (11) zu projizieren,
- einen konvexen Spiegel (3), der angeordnet ist, um das Hauptbild wenigstens teilweise zu reflektieren und um es auf eine dreidimensionale Umgebung (7, 8a, 8b) zu projizieren,
- Mittel (4, 5) zur Aufnahme wenigstens eines Bildes der dreidimensionalen Umgebung,
- Mittel (21) zum Modellieren der dreidimensionalen Umgebung anhand wenigstens eines Bildes der Umgebung, und
**dadurch gekennzeichnet, dass** sie ferner umfasst:
- Mittel (21) zum Konstruieren des Hauptbildes in Abhängigkeit einer Position eines Betrachters (22) und einer Modellierung der dreidimensionalen Umgebung, so dass der Betrachter, der von seiner Position eine Projektion des Hauptbildes auf die Umgebung betrachtet, eine Szene von einem virtuellen Aussichtspunkt (P) aus betrachtet.

14. Vorrichtung nach Anspruch 13, **dadurch gekennzeichnet, dass** die Aufnahmemittel angeordnet sind, um wenigstens ein Bild der Umgebung mittels durch die Umgebung ausgesandter und nicht durch den Spiegel reflektierter Lichtstrahlen (20) aufzunehmen.

15. Vorrichtung nach Anspruch 13 oder 14, **dadurch gekennzeichnet, dass** die Aufnahmemittel eine Kamera (4) sowie Mittel zum Indrehungversetzen (5) der Kamera um eine Rotationsachse (6) umfassen.
